# EUROPEAN PATENT SPECIFICATION

(11) **EP 2 715 499 B1**
(45) Date of publication and mention of the grant of the patent: **02.09.2020**
(21) Application number: 11866113.1
(22) Date of filing: 23.05.2011
(51) Int. Cl.: G06F 3/0488

(54) **INVISIBLE CONTROL**
UNSICHTBARE STEUERUNG
COMMANDE INVISIBLE

(43) Date of publication of application: 09.04.2014
(73) Proprietor: Microsoft Technology Licensing, LLC, Redmond, WA 98052 (US); Esposito, Mario, Redmond, Washington 98052 (US)
(72) Inventor: ESPOSITO, Mario, Redmond, Washington 98052 (US); HUANG, Xuedong, Redmond, Washington 98052 (US); CHEN, Zheng, Beijing 100080 (CN); ZHANG, Zhimin, Beijing 100080 (CN); SUN, Jian-Tao, Beijing 100080 (CN); BAI, Peng, Beijing 100080 (CN); NI, Xiaochuan, Beijing 100080 (CN)
(74) Representative: CMS Cameron McKenna Nabarro Olswang LLP
(86) International application number: PCT/CN2011/074498
(87) International publication number: WO 2012/159254

(56) References cited:
- CN-A- 101 526 881
- US-A1- 2006 284 852
- US-A1- 2008 250 012
- US-A1- 2009 135 152
- US-A1- 2009 228 792
- US-A1- 2009 228 825
- US-A1- 2010 060 599
- US-A1- 2010 105 370
- US-A1- 2010 309 140
- US-A1- 2011 055 753

## Description

### BACKGROUND

Mobile devices have many uses, from consuming content (e.g., textual and video content) to performing a variety of tasks (e.g., performing a search, composing email, etc.). However, the small form factors of most mobile devices provide limited screen real estate for displaying content. In the case of touch screen devices, screen real estate is even more limited since the content must share the screen with controls for interacting with the content. For example, in order to facilitate navigation and use of a mobile application, the mobile application typically includes controls, such as buttons and menus that allow the user to navigate and manipulate content displayed in the mobile application. However, these controls occupy space that could otherwise be used for displaying content of the mobile application.

Also due to the small display size of the mobile device, users may find it difficult to perform tasks using the mobile device and/or navigate between multiple mobile applications. For example, if a user reads a movie review on a web site and wants to rent the movie, the user may need to navigate to a movie rental website or open a movie rental application and type in the name of the movie. Alternatively, if the user is using a movie rental application and desires to perform a search related to a movie, the user may have to open a web browser and input a search query. These scenarios are time-consuming, and may require the user to go back and forth between multiple web browsers and/or applications to look for information about the movie.

US 2011/0055753 A1 discloses a user interface for activating a function by detecting a gesture including short strokes in opposite directions traced on a side of a touchscreen.

The activated function may open an application or activate a search function.

US 2008/0250012 A1 discloses a method to perform searches related to a displayed content comprising highlighting said displayed content via a touch gesture and generating a query based on automatically-identified related subject-matter.

US 2006/284852 A1, US 2009/228825 A1 and US 2009/228792 A1 disclose other methods for triggering different operation modes using gestures.

### SUMMARY

The invention provides a computer-implemented method, a computing device, and one or more computer-readable media, as defined by the appended claims. Any examples of the following description which do not fall under the scope of protection of the appended claims are not to be considered as being part of the invention. This application describes techniques of altering an operating mode of a client device. In one embodiment, a client device may provide an invisible control disposed around at least a portion of a border of a display of the client device. The invisible control may comprise, for example, a soft button that is not visible to a user. A user may perform a selection gesture relative to at least portion of the border of the display of the client device to activate the invisible control. Activation of the invisible control may alter an operating mode of the client device or an application of the client device. Other types of visible and invisible controls and activation techniques are also described herein.

For example, in response to receiving the selection gesture, the client device may change a current mode of operation associated with the client device to a new mode of operation (e.g., from a browsing mode to a search mode). When switching from the current mode to the new mode of operation, the client device may disable at least some interaction with an object that is displayed in the display of the client device. Upon receipt of a subsequent gesture applied on the disabled object and/or data associated with the disabled object, the client device may apply a predetermined action according to the new operating mode. For example, a gesture that in the browsing mode would have panned or zoomed, in the search mode may be used to identify subject matter to be searched.

In some embodiments, the client device may activate different modes of operation depending on a position of the border of the display to which the selection gesture is directed. Additionally or alternatively, different gestures may be used to activate different modes of operation.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items.
FIG. 1 illustrates an example environment including an example invisible control system of a client device.
FIG. 2 illustrates the example invisible control system of FIG. 1 in more detail.
FIGS. 3A-D illustrate example gestures of initiating or actuating an invisible control of the example invisible control system.
FIG. 4 illustrates an example of activating an invisible control mode from among a plurality of invisible control modes using the example invisible control system.
FIG. 5 illustrates another example of initiating or actuating an invisible control mode from among a plurality of invisible control using the example invisible control system.
FIG. 6 illustrates example indicators that can be used to inform the user that the invisible control has been activated.
FIGS. 7A-C and FIGS. 8A and 8B illustrate example use scenarios of using an invisible control of the example invisible control system.
FIG. 9 illustrates an example method of interacting with the example invisible control system.

### DETAILED DESCRIPTION

### Overview

As noted above, developers of mobile applications often are forced to strike a compromise between providing useful controls (e.g., navigation controls such as a back button, specialized controls such as a search button, etc.) and providing more space for displaying content on a display of a mobile device. On the one hand, providing more controls facilitates greater functionality (e.g., navigation and manipulation of content that is displayed on the mobile device). On the other hand, the more the controls that are provided in the mobile application, the less space is available to present content. Furthermore, including multiple different controls may clutter the user interface making interaction with the user interface confusing or complicated for a user.

For example, a user may use an application (such as a web browser) of his/her mobile device to view visual content (e.g., information about a movie from a movie review website). While viewing the visual content, the user may want to obtain additional information (e.g., a location having the movie available for rental). However, the content provider of the visual content (i.e., the website in this example), may not include any additional information that is of interest to the user. In that case, the user would need to open another application (e.g., a movie rental application) or another instance of a web browser to find the additional information (e.g., to locate a movie rental site). Given the small display size and small keyboard of his/her mobile device however, the user may find it cumbersome to perform this search using his/her mobile device.

This application describes a system including an invisible control, which is invisible in the sense that it is not explicitly present or displayed as a control such as a button, an icon, a menu or the like to a user. Rather, the invisible control is a soft button (i.e., a software generated button presented on a display screen) hidden in a predetermined region of a display of a client device and/or an application of the client device, and can be activated in response to detecting or receiving a predefined gesture on the predetermined region. Because the invisible control is invisible, it does not take up any screen real estate, thereby maximizing an amount of content that can be displayed on the display of the client device.

Activation of the invisible control may change an operating mode of the client device and/or application. For example, activation of the invisible control may change from a browsing operation mode in which a particular gesture causes displayed content to pan or scroll, to a search operation mode in which the same or similar gesture is used to identify subject matter for which to search. In another example, activation of the invisible control may change from an image viewing operation mode in which a particular gesture causes panning, scrolling, or zooming to view an image, to an image editing operation mode in which the same or similar gesture causes selection or editing of the image. These are just two examples of how operation modes can be changed upon activation of an invisible control. While other examples are given below, these are also merely illustrative and an invisible control can be used to change between any two or more operation modes. In some examples, the invisible control may function similar to a control, alt, or function key on a keyboard to change an operation of an input from a first mode to another mode.

In some examples, the invisible control may be activated by detection of a gesture in relation a predetermined region of a display of a client device, and deactivated when the gesture is removed (a so called push-on-lift-off embodiment). In other examples, the invisible control may be activated by detection of a gesture in a predetermined region of a display of a client device, and deactivated by detection of a second instance of the gesture (a so called push-on-push-off embodiment).

In some examples, activation of the invisible control may cause a menu, list, table, or other selection interface to be presented. The selection interface may include multiple different actions or operation modes from which the user may select a desired action or operation mode. In another example, selection of the invisible control may cause an interface to presented which cycles through multiple different actions or operation modes over time (e.g., every half second, or every second). In yet another example, activation of the invisible control using different gestures (e.g., pressing and holding, tapping, swiping, rotating, etc.) and/or gestures in different locations on the display (e.g., different edges, a center, etc.) may initiated different actions or operation modes. In all of these examples, activation of the invisible control may allow the user to select from among multiple different operation modes.

The invisible control described herein may be used from within any application of a client device. By way of example and not limitation, the application may include, but is not limited to, an operating system (e.g., Window Mobile®, Android®, iOS®, etc.) of the client device, a software program (such as a web browser application, a search application, a video player application, a music player application, an email client, a calendar application, a word processing application, a spreadsheet application, a photo viewing and/or editing application, a game, etc.), etc. To facilitate application of the invisible control from within any application, an Application Programming Interface may be provided to developers (e.g., as part of a software development kit), so that developers can develop applications that are able to make use of the invisible control.

In some embodiments, the user may want to manipulate or interact with the application or data (for example, content displayed in the application and/or metadata such as historical user data in one or more past sessions, etc.) associated with the application using the invisible control. In one embodiment, the user may do so by applying a selection gesture on a predetermined region of the client device or the application. By way of example and not limitation, the predetermined region may include, but is not limited to, all or part of a border or edge of a display of the client device, all or a portion of a border or edge of a window frame bounding the application, one or more corners of the display of the client device, one or more corners of a window frame bounding the application, a center of the display of the client device, a center of a window frame bounding the application, etc.

In one embodiment, the selection gesture may include, for example, using a pointing device, such as a mouse, a stylus or a finger, etc., to press and hold the predetermined region of the client device or the application, tap the predetermined region of the client device or the application a predetermined number of times within a predetermined time period (e.g., two times within one second), swipe up or down, swipe up and down in quick succession along the predetermined region of the client device or the application, move along the predetermined region of the client device or the application in a clockwise or anticlockwise direction. However, these gestures are merely illustrative, and any other desired gesture may be used to activate the invisible control. For example, in some embodiments, the search gesture may include a motion of a body or a part of the body of the user such as a finger, a hand, head, and/or an arm. The client device may detect the body motion through a camera, other image capture device or any motion detection component of the client device. A motion of the user may be interpreted to be a selection gesture and, when performed toward or in relation to a region of the invisible control, may activate the invisible control to change a mode of operation of the client device. Moreover, in the case of a client device with a touch screen display, the gestures may include single touch gestures (using a single pointing device) or multi-touch gestures (using multiple pointing devices or points of content). Any of the gestures described herein in terms of a touch screen may also be translated and applied in the context of a body motion detected by a motion detection component.

In response to receiving or detecting the selection gesture, the client device may activate the invisible control and/or a predetermined action associated with the invisible control. The predetermined action may include, but is not limited to, an operation that is applicable on the application or the content of the application. By way of example and not limitation, the predetermined action may include disabling interaction with the application or the content of the application, changing a current mode of operation of the application to a new mode of operation, performing one or more operations on the application and/or the content of the application, etc.

In one embodiment, the predetermined action associated with the invisible control may be predefined or preprogrammed by a developer of the application, a content provider that serves content of the application, and/or the user of the client device. Additionally or alternatively, the application may provide a user interface for the user to select an action from a set of predetermined actions.

While many of the embodiments herein describe an invisible soft button control that is hidden from view of a user, in other embodiments other types of controls may be used to change an operation mode of the client device and/or to disable objects of the client device. For example, in some embodiments, the control may take the form of a physical button disposed on the client device (e.g., a dedicated search button or operation mode change button, a capacitive or other touch sensor disposed in or on the client device (e.g., around at least a portion of a border of a housing or bezel of the client device), a visible soft button control displayed somewhere on the display of the client device, a voice activated control (e.g., "enter search mode" or "change operation mode"), or the like. In one specific embodiment, the control may comprise a transparent or translucent soft button, such that the content is still viewable through the control, but the outline of the control is visible to the user on the display. Any of the techniques described herein as applied to an "invisible control" may also be applied to any of these other types of visible and invisible controls. For the sake of brevity, this application does not describe specific examples using each of these different types of controls.

The techniques described herein allow an application to provide a control that does not occupy display space (or occupies limited display space in the case of a visible soft button control), thus freeing up more space for displaying content that is of interest to the user. Furthermore, the techniques allow a developer and/or content provider to customize controls and/or associated functions for the user to interact with or manipulate content to be served in an application of a client device.

### Exemplary Architecture

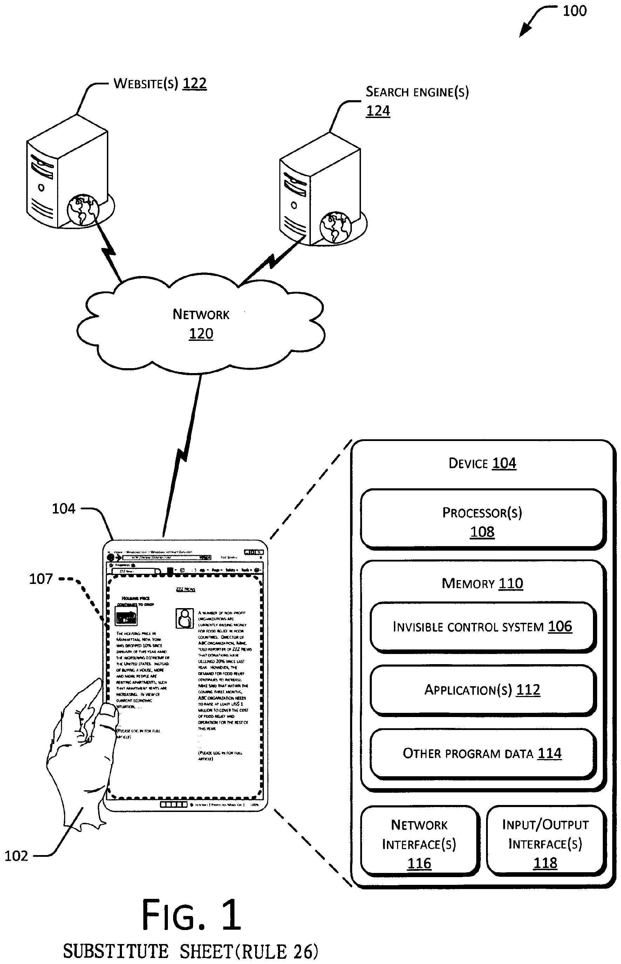

FIG. 1 illustrates an exemplary environment 100 usable to implement an invisible control system. The environment 100 includes a user 102, a client device 104 and an invisible control system 106 usable to implement an invisible control 107. The invisible control 107 is shown here as a broken line around the border of the display screen of the client device 104 for illustration purposes only. In practice, the invisible control 107 would not be visible to the user and may be disposed around the entire border (as shown), a portion of the border (e.g., one or more edges of the display screen), or at another location on the display screen.

The client device 104 may be implemented as any of a variety of conventional computing devices including, for example, a personal computer, a notebook or portable computer, a handheld device, a netbook, an Internet appliance, a portable reading device, an electronic book reader device, a tablet or slate computer, a television, a set-top box, a game console, a mobile device (e.g., a mobile phone, a personal digital assistant, a smart phone, etc.), a media player, etc. or a combination thereof. The invisible control system 106 described herein may be particularly useful for client devices having limited screen sizes, such as mobile devices. However, the invisible control system 106 is not limited to mobile devices and may be used with any client device. For example, the client device 104 may be a gaming device with a camera or other motion detection interface such as an Xbox® gaming console configured with a Kinect™ motion detection system, both available from Microsoft Corporation of Redmond Washington. The client device 104 may receive and interpret images or signals to determine what motion the user 102 is performing. The invisible control system 106 may interpret motions in proximity to or directed toward a predetermined invisible control as being a selection gesture to activate the invisible control to perform an action or change an operation mode of the client device (e.g., trigger a search and/or define a scope of the search). In some examples, such as the mobile device shown in FIG. 1, the client device may have an integral display, while in other examples, such as the gaming console example, the client device may employ an external display (e.g., a television or projector). As used in this application, both integral and external displays are considered to be displays of the client device.

In one embodiment, the client device 104 may include one or more processors 108 coupled to memory 110. The memory 110 may include one or more applications 112 (e.g., an operating system, a web browser application, a search application, a video player application, a music player application, an email client, a calendar application, a word processing application, a spreadsheet application, a photo viewing and/or editing application, a game, etc.) and other program data 114. In some embodiments, the client device 104 may further include one or more wired and/or wireless network interfaces 116 and input/output interfaces 118. The one or more processors 108 may be configured to execute instructions received from the network interface 116, received from the input/output interface 118, and/or stored in the memory 110.

The memory 110 may include computer-readable media in the form of volatile memory, such as Random Access Memory (RAM) and/or non-volatile memory, such as read only memory (ROM) or flash RAM. The memory 110 is an example of computer-readable media. Computer-readable media includes at least two types of computer-readable media, namely computer storage media and communications media.

Computer storage media includes volatile and non-volatile, removable and non-removable media implemented in any method or technology for storage of information such as computer readable instructions, data structures, program modules, or other data. Computer storage media includes, but is not limited to, phase change memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium that can be used to store information for access by a computing device.

In contrast, communication media may embody computer readable instructions, data structures, program modules, or other data in a modulated data signal, such as a carrier wave, or other transmission mechanism. As defined herein, computer storage media does not include communication media.

In some embodiments, the environment 100 may further include a network 120, one or more websites 122, and/or one or more search engines 124. The network 120 may be a wireless or a wired network, or a combination thereof. The network 120 may be a collection of individual networks interconnected with each other and functioning as a single large network (e.g., the Internet or an intranet). Examples of such individual networks include, but are not limited to, Personal Area Networks (PANs), Local Area Networks (LANs), Wide Area Networks (WANs), and Metropolitan Area Networks (MANs). Further, the individual networks may be wireless or wired networks, or a combination thereof.

In one embodiment, the invisible control system 106 may be integrated with the client device 104. By way of example and not limitation, some or all of the invisible control system 106 may be included in the client device 104, for example, as software and/or hardware installed in the client device 104. In other embodiments, the client device 104 and the invisible control system 106 may be separate systems. For example, the invisible system 106 may be installed on a computing device (not shown) separate from the client device 104 and perform one or more functions on the client device 104 through the network 118, for example.

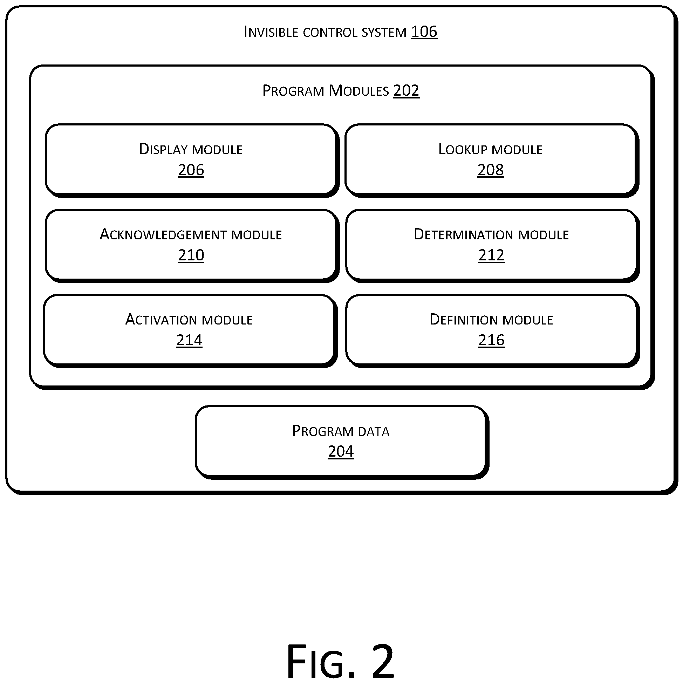

FIG. 2 shows the invisible control system 106 in more detail. In one embodiment, the invisible control system 106 may include program modules 202 and program data 204. The program module 202 and the program data 204 may be stored, for example, in the memory 110 of the client device 104.

Generally, the user 102 may use the client device 104 or the application 112 of the client device 104 to consume content. The content may include text, images, video, and/or audio. In one embodiment, the client device 104 and/or the application 112 may include one or more invisible controls that are operable and/or manageable by the invisible control system 106.

By way of example and not limitation, the user 102 may apply a selection gesture on a predetermined region of the client device 104 and/or the application 112 to activate invisible control 107. In one embodiment, the predetermined region may include, but is not limited to, all or part of a border or an edge of a display of the client device 104, or all or part of a border or an edge of a window frame bounding the application 112. Generally, the predetermined region of the client device 104 or the application 112 may be free of any visible control such as a button, icon, graphic, menu or the like that is visibly displayed to the user.

In some embodiments, prior to detecting or receiving the selection gesture, the invisible control system 106 may not provide any indication to the user 102 that an invisible control is present for activation. However, in other embodiments, prior to detecting or receiving the selection gesture, the invisible control system 106 may provide an indication to the user 102 that an invisible control is present for activation or actuation. For example, the invisible control system 106 may provide an indication to the user 102 by presenting a tutorial when the user first uses the device, by periodically providing hints or suggestions, by briefly showing a visual representation of the invisible button (e.g., at startup of an application and/or periodically thereafter), etc.

Additionally or alternatively, the invisible control system 106 may include a display module 206 to provide an indication to the user 102 in response to detecting activation of the invisible control 107. That is, once a user activates the invisible control 107, the display module 206 may illuminate an icon or otherwise indicate to a user that the invisible control 107 is activated. The display module 206 may keep the indication hidden or invisible to the user 102 if no selection gesture is detected and/or after the selection gesture is removed from the predetermined region, for example.

Additionally or alternatively, the invisible control system 106 may include a lookup module 208. The lookup module 208 may provide a lookup means (for example, a lookup table, a lookup list, a menu, a bubble, a callout, etc.) describing the one or more invisible buttons that are provided by the invisible control system 106 (e.g., one or more invisible buttons that are specific to the client device 104 and/or the application 112) to the user 102. Prior to applying the selection gesture on the predetermined region, the user 102 may be allowed to determine the one or more invisible buttons that are provided by the invisible control system 106 through the lookup module 208.

In some embodiments, the invisible control system 106 may provide a plurality of invisible controls to the user 102, for example, on a same position and/or a same edge of the display of the client device 104 or the window frame of the application 112. In one embodiment, more than one invisible controls can be provided on the same position or the same edge of the display of the client device 104 and/or the window frame of the application 112 (i.e., on the same predetermined region of the client device 104 and/or the application 112). In that case, the invisible control system 106 may present a menu of invisible controls from which the user 102 can select.

Additionally or alternatively, the invisible control system 106 may cycle through the plurality of invisible controls and present each invisible control to the user 102 cyclically. By way of example and not limitation, in response to receiving a selection gesture from the user 102, the invisible control system 106 may present a next invisible control of the plurality of invisible controls for a predetermined time interval (e.g., a half second, one second, etc.), before cycling to a next invisible control, until the user 102 selects a desired invisible control or until the user 102 removes his/her selection gesture from the predetermined region of the client device 104 or the application 112.

Additionally or alternatively, the invisible control system 106 may present a different invisible control of the plurality of invisible controls in response to detecting that the user 102 moves his/her pointing device or finger along the predetermined region (e.g., along an edge or a border of the display of the client device 104 or the application 112).

In one embodiment, the invisible control system 106 may present the plurality of invisible controls one by one in a descending order of frequency of use of invisible controls that are specific to the application 112 or the client device 104 in one or more past sessions or in a current session. In some embodiments, the invisible control system 106 may present the plurality of invisible controls one by one in a descending order of recency of use of invisible controls that are specific to the application 112 or the client device 104. In other embodiments, the invisible control system 106 may allow the user 102 to customize an order of presentation of the plurality of invisible controls by providing, for example, an interface, for the user 102 to define one or more favorite invisible controls (that are specific to the application 112 or the client device 104) that need to be presented as the earliest invisible controls.

In one embodiment, in response to detecting the selection gesture on the predetermined region (e.g., the border or edge of the display of the client device 104), the display module 206 may provide information about any invisible control that may be activated or actuated to the user 102. For example, in response to detecting or receiving the selection gesture, an acknowledgement module 210 of the invisible control system 106 may provide an acknowledgement to the user 102 that the user 102 has activated an invisible control. The acknowledgement may include, for example, displaying a visible indicator (such as a visible line, border, etc.) on the predetermined region, changing a color of the predetermined region, changing a color of a graphic (such as an icon, a button, etc.) associated with the object, illuminating a graphic associated with the object, changing a color of a frame associated with the object, and/or playing a predetermined audio signal, etc.

The invisible system 106 may further include a determination module 212 to determine a location or side of the predetermined region (for example, which edge of the border of the display of the client device 104 or which edge of the border of the window frame bounding the application 112) at which the selection gesture is detected.

In one embodiment, in response to determining a location or side of the predetermined region at which the selection gesture is detected, the determination module 212 may further determine a predetermined action to be taken based on the determined location or side of the predetermined region. The determination module 212 may notify an activation module 214 to activate the predetermined action and/or prepare for further input or gesture from the user 102. In some embodiments, different locations or sides of the predetermined regions may be associated with different predetermined actions. In other embodiments, some locations or sides of the predetermined regions may be associated with a same predetermined action. In other embodiments, some locations or sides of the predetermined regions may be associated with a same predetermined action but with different magnitudes (such as fast forwarding, slow forwarding, normal playing a video, for example).

By way of example and not limitation, the predetermined action may include disabling interaction with the object displayed on the client device 104. The one or more predetermined interactions may include, but are not limited to, moving/panning, resizing, zooming in or out of the displayed object, etc. In some embodiments, the interactions may also include disabling hyperlinks, radio buttons, and interactive fields in the object. In one embodiment, the invisible control system 106 may continue to disable the displayed object until the selection gesture (e.g., pressing and holding) is released.

Additionally or alternatively, the predetermined action may include changing a current mode of operation (e.g., a reading mode) associated with the client device 104 or the object to a new mode of operation (e.g., a search mode).

Additionally or alternatively, the predetermined action may include, but is not limited to, an operation that is applicable on the client device 104 or data associated with the client device 104 (including content displayed in the display of the client device 104 and/or metadata associated with the client device 104, etc.). Additionally or alternatively, the predetermined action may include an operation that is applicable on an object displayed on the client device 104 and data associated with the displayed object. The displayed object may include, for example, the application 112 that is in an active view shortly prior to detecting or receiving the selection gesture. For example, the predetermined action may include performing one or more operations on data (such as content and/or metadata, etc.) associated with the client device 104, and/or the data (such as content and/or metadata) associated with the object.

In an event that a predetermined action is to be activated, the action activation module 214 may activate the predetermined action based on the determined location or side of the predetermined region. Similar to the foregoing description, different locations or sides of the predetermined regions may be associated with different predetermined actions, a same predetermined action, or a same predetermined action but with different magnitudes. The predetermined action may include the operations described above in the foregoing description.

In some embodiments, the invisible control system 106 may further detect or receive one or more subsequent gestures from the user 102. In one embodiment, the user 102 may apply the one or more subsequent gestures on the displayed object or the data associated with the displayed object. By way of example and not limitation, the user 102 may select one or more disjoint or discrete portions of the data associated with the displayed object. In one specific embodiment, selection of the invisible control may initiate a search operation mode and the subsequent gestures may identify (e.g., encircle, partially encircle, overlap, touch, point to, etc.) subject matter for which a user desires to perform a search.

In response to detecting or receiving the one or more subsequent gestures, the action activation module 214 may actuate the predetermined action (which has been activated in response to receiving or detecting the selection gesture) based on the one or more subsequent gestures. In the case of the search operation mode, upon receipt of the second or subsequent gesture(s), the activation module 214 may automatically initiate a search based on the subject matter identified by the second or subsequent gestures.

The invisible control system 106 may further include a definition module 216. The definition module 216 may provide allow the invisible control system 106 to recognize different gestures corresponding to different invisible controls. The gestures may be predefined (e.g., by device manufacturer, an application developer, a content provider, etc.) or may be user defined. In some embodiments, the definition module 216 may provide an Application Programming Interface (API) that allows the user 102, the application vendor of the application 112 and/or the content provider that provides content to be served in the application 112, etc., to develop and customize an invisible control that can be supported by the invisible control system 106. Additionally or alternatively, the definition module 216 may provide predefined invisible controls or invisible control definitions that can be adopted or selected by the user 102, the application 112 and/or the content of the application 112.

### Exemplary Use Scenarios

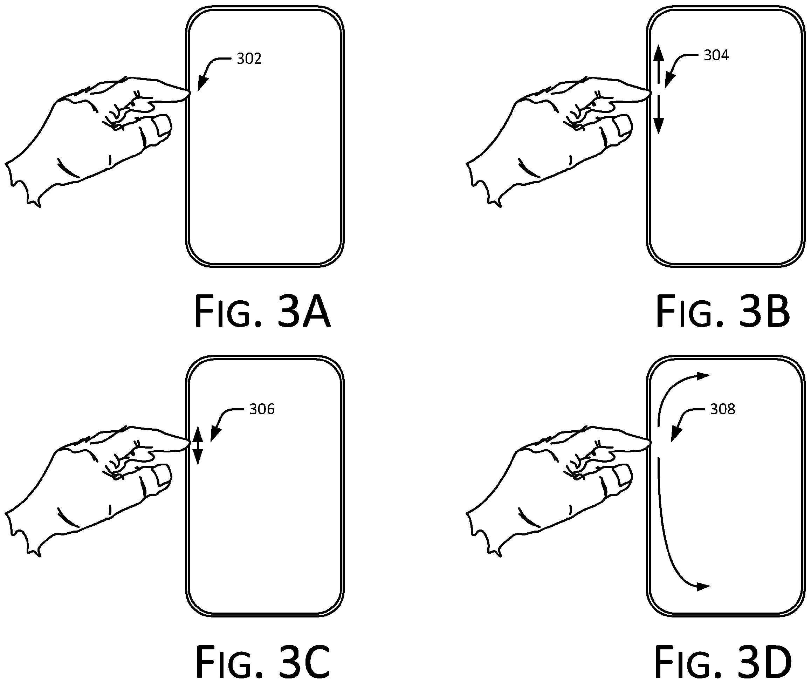

FIGS. 3A-D illustrate example gestures that can be used for initiating or actuating an invisible control of the invisible control system 106. For example, FIG. 3A illustrates that the user 102 may touch, tap, or touch and hold 302 an edge or a border of the display of the client device 104 to activate an invisible control of the invisible control system 106. As discussed above, the invisible control may be activated according to a so called push-on-lift-off embodiment in which the invisible control is only activated while touch or other input is maintained. Or, the invisible control may be activated according to a so called push-on-push-off embodiment in which the invisible control is turned on by a first gesture and is turned off by a second instance of the same or different gesture.

Alternatively, the user 102 may activate an invisible control of the invisible control system 106 by swiping up or down (or swiping left or right) 304 along an edge or a border of the display of the client device 104 as shown in FIG. 3B. In some embodiments, the user 102 may activate an invisible control of the invisible control system 106 by alternately swiping up and down (or left and right) 306 in quick succession along an edge or a border of the display of the client device 104 as shown in FIG. 3C. In other embodiments as shown in FIG. 3D, the user 102 may activate an invisible control of the invisible control system 106 by moving 308 along a border of the display of the client device 104 in a clockwise or anticlockwise direction. Although a finger is described to be used to initiate or actuate an invisible control of the invisible control system 106, any pointing device such as a stylus, a mouse, etc., may additionally or alternatively be used to initiate or actuate the invisible control of the invisible control system 106 on the client device 104. Also, while single input gestures are illustrated, multi-touch gestures using multiple points of contact or input may also be used.

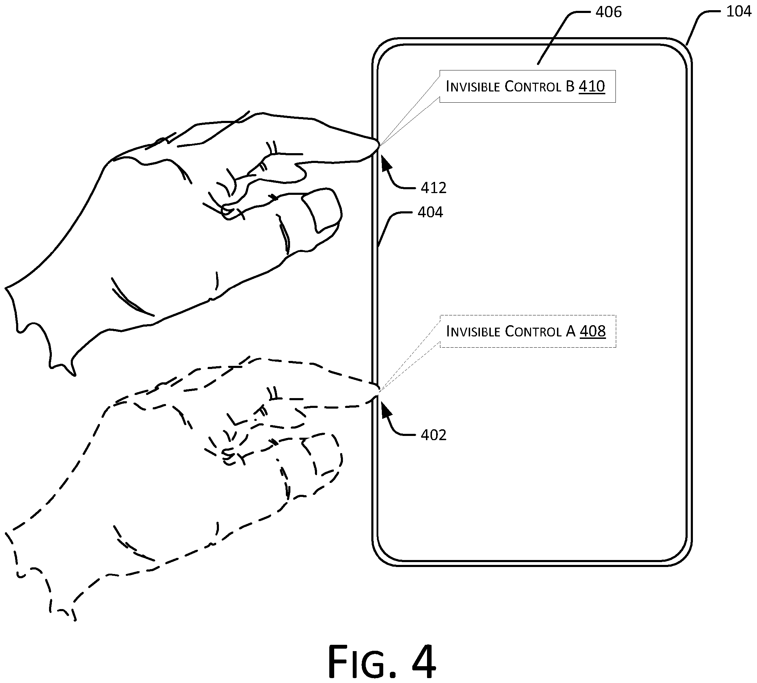

FIG. 4 illustrates a first example of selecting an invisible control from a plurality of available invisible controls of the invisible control system 106. By way of example and not limitation, the user 102 may perform a selection gesture by touching 402 on a predetermined region (e.g., a certain location on an edge 404 of a display 406 as shown in FIG. 4) of the client device 104 for a predetermined period of time (e.g., a half second, one second, etc.). In response to receiving the selection gesture, the invisible control system 106 may present a representation (e.g., a callout, a balloon, etc.) of an invisible control, such as Invisible Control A 408, that may be activate upon selection. In one embodiment, the invisible control system 106 may present the representation of the invisible control (such as Invisible Control A 408) based on the position on the edge 404 that the selection gesture is received. Thereafter, the user 102 may select the invisible control by clicking on the representation of the invisible control, removing the finger (or the pointing device if used) from the edge 404 of the display 406, or the like.

In some embodiments, the user 102 may choose not to select Invisible Control A 408, and may move 412 his/her finger (or a pointing device if used) to a new position on the edge 404 of the display 406 of the client device 106. In response to receiving the user gesture in the new position, the invisible control system 106 may present a new representation or indication of a new invisible control, such as Invisible Control B 410 for the user 102 to select based on the new position on the edge 404 of the display 406 of the client device 104. As the user 102 moves along the edge 404 of the display 406 of the client device 104, the invisible control system 106 may present representations of one or more other invisible controls for the user 102 to select based on the location or position of the finger (or the pointing device if used) of the user 102.

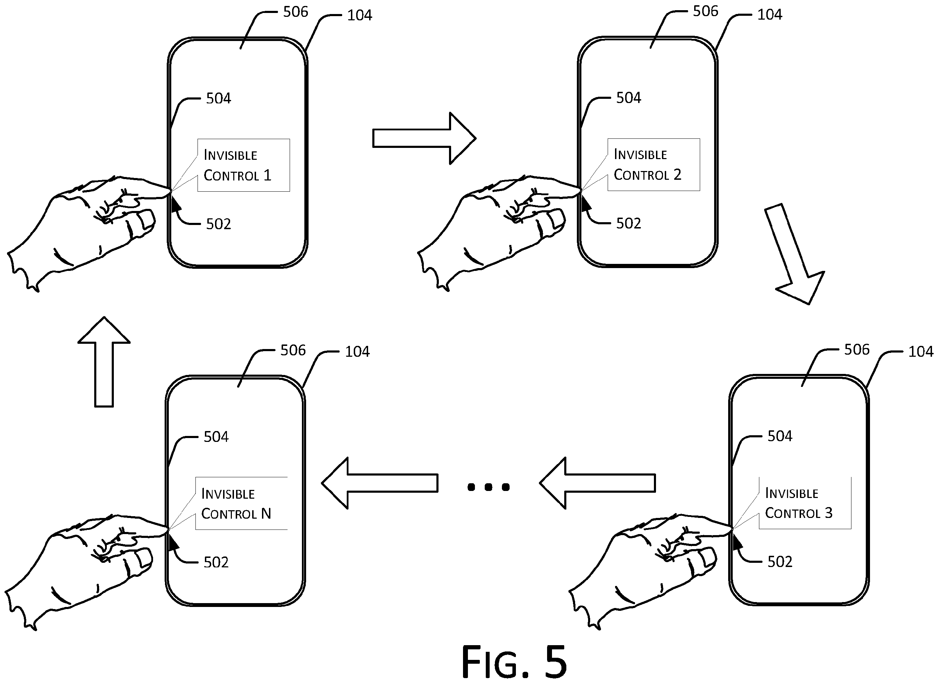

FIG. 5 illustrates a second example of selecting an invisible control from a plurality of invisible controls of the invisible control system 106. In this example, the user 102 may press and hold on a predetermined region of the client device 104 or the application 112 and the invisible control system 106 may present a plurality of invisible controls in a cyclical manner. The user 102 may press and hold 502 on an edge 504 of a display 506 of the client device 104. In response to receiving this gesture from the user 102, the invisible control system 106 may present an acknowledgement or indication that an invisible control (such as Invisible Control 1) may be activate upon user selection. The invisible control system 106 may present this acknowledgement or indication immediately or after a predetermined period of time.

In some embodiments, if the user 102 does not select the invisible control, the invisible control system 106 may cycle through invisible controls one after another (e.g., Invisible Control 1, followed by Invisible Control 2, followed by Invisible Control 3, and so forth) after a predetermined time interval (e.g., a half second, one second, etc.). The invisible control system 106 may continue to present subsequent invisible controls (e.g., any number of invisible control modes up to N) cyclically until the user 102 selects an invisible control or the user 102 removes his/her finger (or a pointing device if used) from the edge 504 of the display 506 of the client device 104. The various invisible controls may correspond to any desired operation modes or actions. For example, Invisible Control 1 may correspond to keyboard operations when a "Ctrl" button is depressed, Invisible Control 2 may correspond to operations when an "Alt" button is depressed, and Invisible Control 3 may correspond to operations when a "Function" button is depressed. In another example, Invisible Control 1 may correspond to operations for browsing content, Invisible Control 2 may correspond to operations for searching content, and Invisible Control 3 may correspond to operations for editing content.

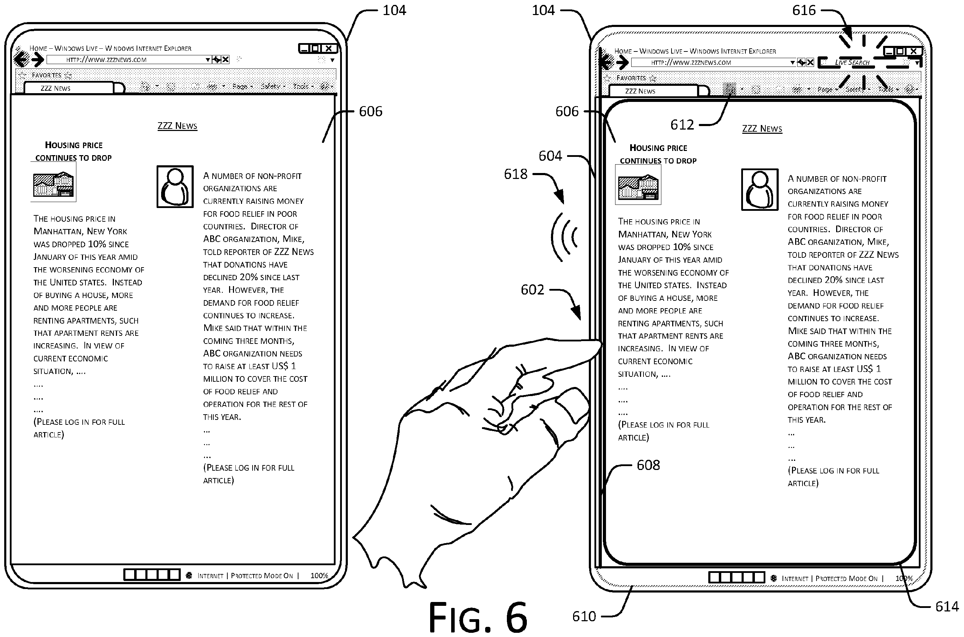

FIGS. 6, FIGS. 7A-C and FIGS. 8A and 8B illustrate various use scenarios possible using an invisible control. The use scenarios are described with reference to the example environment 100 of FIG. 1 for convenience. However, the use scenarios are not limited to use with the example environment 100 of FIG. 1.

FIG. 6 illustrates an example in which the user 102 activates an invisible control of the invisible control system 106 on the client device 104. The client device 104 may present content on the display of the client device 104. The presented content may include text, images, graphics such as an icon representing an application, a search box, a representation of audio and/or video content, and the like. In some embodiments, the user 102 may be using an application (such as the application 112) of the client device 104.

The user 102 may apply a selection gesture 602 (as described in the foregoing description) on an edge 604 of a display 606 of the client device 104 as shown in FIG. 6. In response to detecting the selection gesture, the invisible control system 106 may provide an acknowledgement to the user 102 that an invisible control of the invisible control system 106 is activated. For example, the invisible control system 106 may present a visible line 608, along the edge of the display on which the selection gesture is applied. Additionally or alternatively, the invisible control system 106 may change a color of a window frame 610 of the application, a color of a graphic 612 (such as a button or icon) displayed in the application, display a border 614 bounding the content of the application, illuminate or "glow" an icon or a field 616, and/or play 618 a predetermined audio signal. In one specific embodiment, activation of the invisible control activates a search operation mode, in which a user may circle, highlight, or otherwise indicate subject matter for which to search. In this embodiment, activation of the invisible control may also cause a search box, such as search box 616, to be displayed for entry of a textual search query. In this embodiment, the search box 616 may serve the additional purpose of notifying the user that the invisible control is activated.

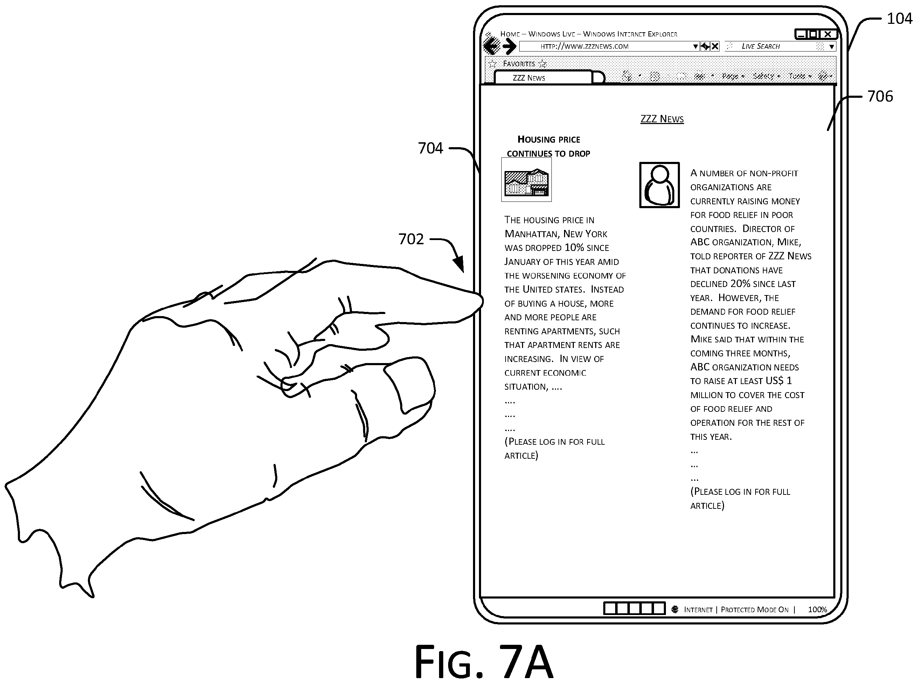

FIGS. 7A-C illustrate an embodiment of the invention in which the user 102 is using an application (e.g., a web browser application of the application 112) of the client device 104 and wants to perform a search based on some or all of the content displayed in the application 112. The content may include, but is not limited to, text, images, and representations of video and/or audio content. In this example, the user 102 may activate the invisible control by applying a selection gesture 702 on a predetermined region of the client device 104 or the application 112 (for example, on an edge 704 of the display 706 of the client device 104). Additionally or alternatively, the invisible control may be activated by voice control (e.g., "change operation mode," "search mode," "perform action A," or the like). In other embodiments, instead of an invisible control, a visible control may be used to change an operation mode or perform a predefined action. Examples of visible controls include, without limitation, physical buttons of the client device, capacitive or other touch sensitive controls (e.g., disposed around a border of a housing or bezel of the client device), and/or soft buttons or icons displayed on the display of the client device. In the example of FIG. 7A, a visible control button could be added to the browser (e.g., next to the home or print icons in the ribbon) or the "Live Search" box could function as a visible control that, when selected by the user, causes the client device to enter a search mode.

In response to receiving the selection gesture or voice command, the invisible control system 106 may disable or freeze interaction with some or all of content displayed in the display of the client device 104. For example, the invisible control system may prevent the object from panning, scrolling, and/or zooming. Additionally or alternatively, in response to receiving the selection gesture, the invisible control system 106 may disable or freeze interaction with the application 112 and/or corresponding content served in the application 112. Additionally or alternatively, the invisible control system 106 may disable one or more hyperlinks, radio buttons, and/or interactive fields of some or all of the content displayed in the display of the client device 104.

Additionally or alternatively, the invisible control system 106 may change a current mode of operation (e.g., a mode that allows the user 102 to move, resize and/or zoom, etc.) to a new mode of operation (e.g., a search mode) configured to allow the user to identify content to be searched. For example, in the search mode, the user may be allowed to circle, highlight, overlap, or otherwise gesture to identify subject matter to be searched. The user may also be allowed to enter a textual query in a search box and/or enter a voice query via a microphone of the client device.

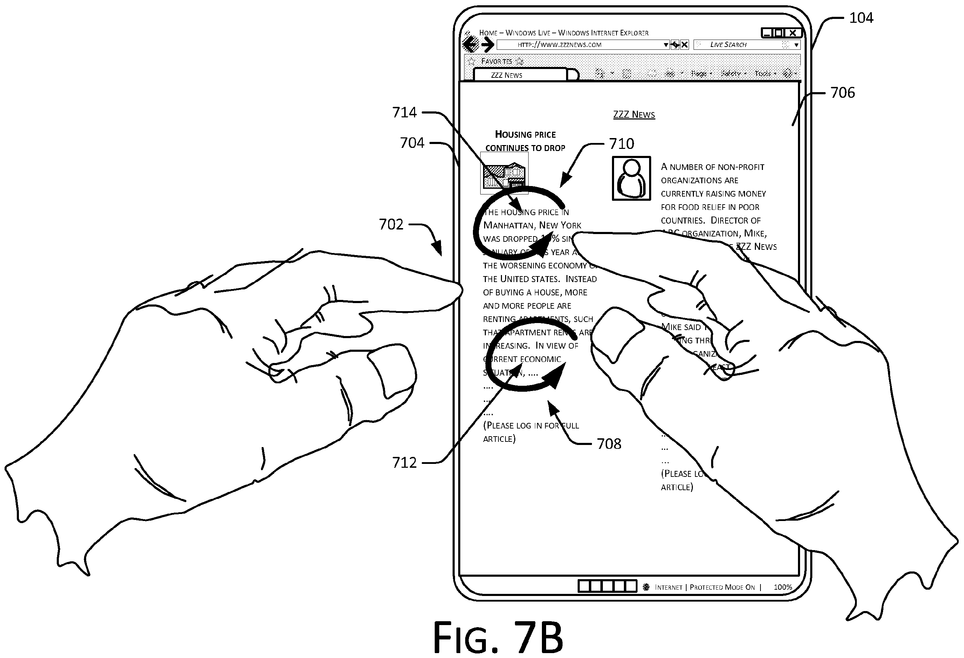

In some embodiments, the user 102 may further input one or more subsequent gestures (for example, gestures 708 and 710) to select one or more objects (e.g., 712 and 714) displayed in the display 706 of the client device 104 as shown in FIG. 7B. While the subsequent gestures are shown being made by a separate hand of the user in this figure, in other instances the subsequent gestures may be made by the same hand as that activating the invisible control. The user 102 may apply these one or more subsequent gestures to identify subject matter to be searched. By way of example and not limitation, the one or more selected objects may include, but are not limited to, some or all of the content served in the application 112. This selected content may include, but is not limited to, text, an image, or a representation of video and/audio content. Furthermore, the one or more selected objects may include discrete objects that are separate and disjoint with each other. In one embodiment, the one or more subsequent gestures may include, but are not limited to, bounding or substantially bounding the one or more selected objects. Other examples of gestures may include drawing a gesture that intersects or overlaps subject matter to be searched, highlighting subject matter to be searched, drawing a checkmark or letter, or any other gesture that identifies subject matter to be searched.

In response to receiving the one or more subsequent gestures, the invisible control system 106 may apply the predetermined action based on the one or more selected objects. In one embodiment, the invisible control system 106 may formulate a search query based on the one or more selected objects (e.g., the identified subject matter). Additionally, the invisible control system 106 may further formulate the search query based on context associated with the one or more selected objects and/or the application 112.

In one embodiment, the context associated with the one or more selected objects and/or the application 112 may include, but is not limited to, content proximate to the one or more selected objects, a paragraph having a portion thereof within the one or more selected objects, a sentence having a portion thereof within the one or more selected objects, an image having a portion thereof within the one or more selected objects, a representation of an audio recording having a portion thereof within the one or more selected objects, and/or a video having a portion thereof within the one or more selected objects. The context may additionally or alternatively include information related to the application 112 that displays the one or more selected objects, location data of the client device 104, and/or metadata associated with the one or more selected objects. Before any location data or other personally identifiable data of the user 102 is captured or transmitted to a search application or engine, the user 102 may be prompted whether he/she wants to share such information.

In one embodiment, in response to completion of the one or more subsequent gestures, the invisible control system 106 and/or the client device 104 may automatically cause a search to be performed based at least in part on the identified subject matter. In another embodiment, the invisible control system 106 may present the formulated search query to the user 102 and allow the user 102 to edit, modify and/or confirm the formulated search query. In response to receiving a confirmed search query from the user 102, the invisible control system 106 may perform the search based on the confirmed search query.

In some embodiments, the invisible control system 106 may submit the formulated search query to a local search application or a remote search engine (such as the one or more search engines 124). The invisible control system 106 may receive search results from the local search engine or the remote search engine, and present the search results to the user 102.

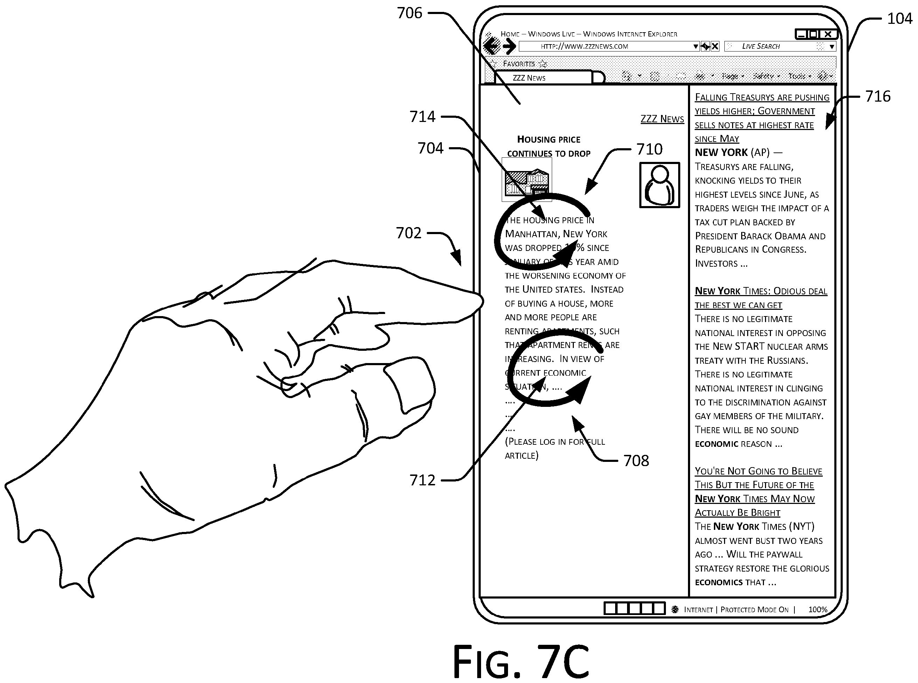

In one embodiment, in response to receiving the search results, the invisible control system 106 may present the search results in a floating window 716 overlaid on the original content served in the application 112 as shown in FIG. 7C. In another embodiment, the invisible control system 106 may present the search results in a floating window 716 that may be partly transparent (e.g., 40%, 50%, 60% transparency) and overlaid on the original content of the application 112. In some embodiments, the invisible control system 106 may present a summary of the search results, such as headings of the search results, to the user 102 but may expand a search result in response to receiving a selection of the search result (e.g., touching a heading of the search result) by the user 102.

Additionally or alternatively, if multiple objects are selected, the invisible control system 106 may compare the one or more selected objects and present a comparison result to the user 102.

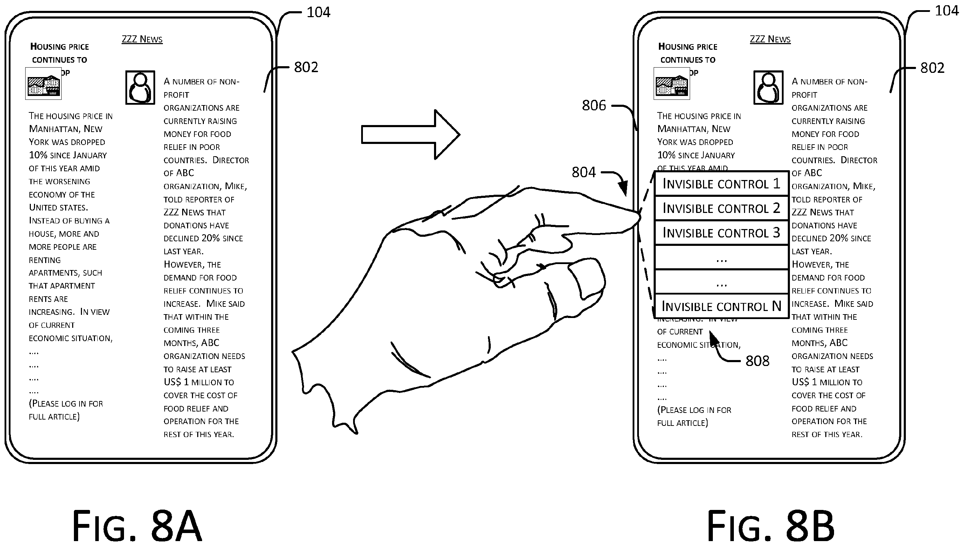

FIGS.8A and 8B illustrate an example of using the invisible control system 106 to maximize space for presenting content of an application. In one embodiment, the invisible control system 106 may be used by an application (such as the application 112) to hide some or all of (standard and/or specialized) controls included in the application. The client device 104 may therefore dedicate most or all of its display space to display content of the application 112, while using little or no space to display the controls (such as menu, graphics, buttons, icons, etc.) of the application. If the user 102 wants to use certain controls of the application 112, the user 102 may bring the hidden controls up for display by applying a selection gesture on a predetermined region of the client device 104 or the application 112 as described in the foregoing description, and select a desired control for use thereafter.

In one example, the client device 104 may use an entire display area of a client device to display content of the application 112. That is, the client device 104 may hide any control (e.g., a menu, a graphics, an icon, a button, a slider bar, a scroll bar and/or an information bar, etc.) of the application 112. In other embodiments, the client device 104 may hide any portion of the application 112 other than the area corresponding to the content of the application 112.

In one embodiment, the invisible control system 106 may further provide a specification for an application vendor of the application 112 to link those controls, slider bar, information bar, etc., to one or more invisible controls operable and/or manageable by the invisible control system 106. For example, the invisible control system 106 may define a specification or schema in Extensible Markup Language (XML). The application vendor of the application 112 may follow the specification or schema, and link any controls of the application 112 to one or more invisible controls provided by the invisible control system 106. Similar to the foregoing embodiments, the user 102 may activate an invisible control by performing a selection gesture on a predetermined region of the client device 104 or the application 112.

FIG. 8A illustrates an example of a web browser application using the invisible control system 106. No visible controls such as for navigating and manipulating content of the web browser application or for interacting with the web browser application are displayed on display 802 of the client device 104. When the user 102 wants to navigate or manipulate the content of the web browser application, the user 102 may apply a selection gesture 804 on an edge 806 of the display 802 of the client device 104 as described in the foregoing description to view or activate one or more invisible controls of the invisible control system 106.

FIG. 8B illustrates an example of presenting a menu of invisible controls in response to receiving a selection gesture from the user 102. In response to receiving the selection gesture, the invisible control system 106 may present a menu 808 of invisible controls to the user 102 for selection. The menu 808 may be a menu including text describing functions of the invisible controls, and/or a menu including graphics representing functions of the invisible controls, etc. In one embodiment, the invisible control system 106 may present a different menu of invisible controls to the user 102 if the user 102 applies the selection gesture on a different edge.

### Exemplary methods

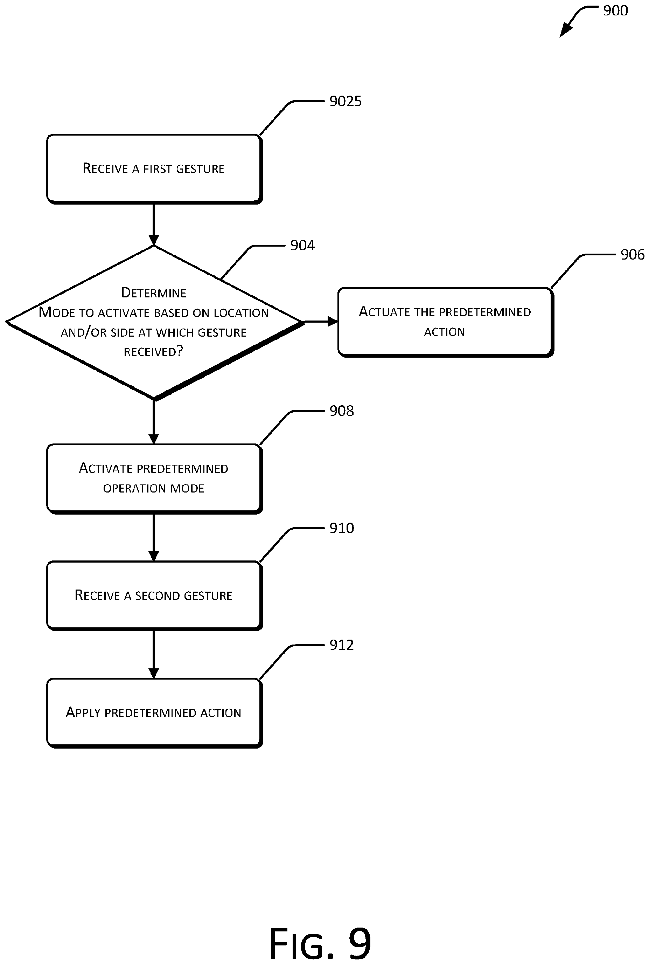

FIG 9 is a flow chart depicting an example method 900 of interacting with the example invisible control system 106. The method of FIG. 9 may, but need not, be implemented in the environment of FIG. 1 and using the system of FIG. 2. For ease of explanation, method 900 is described with reference to FIGS. 1 and 2. However, the method 900 may alternatively be implemented in other environments and/or using other systems.

Method 900 is described in the general context of computer-executable instructions. Generally, computer-executable instructions can include routines, programs, objects, components, data structures, procedures, modules, functions, and the like that perform particular functions or implement particular abstract data types. The methods can also be practiced in a distributed computing environment where functions are performed by remote processing devices that are linked through a communication network. In a distributed computing environment, computer-executable instructions may be located in local and/or remote computer storage media, including memory storage devices.

The exemplary methods are illustrated as a collection of blocks in a logical flow graph representing a sequence of operations that can be implemented in hardware, software, firmware, or a combination thereof. The order in which the methods are described is not intended to be construed as a limitation, and any number of the described method blocks can be combined in any order to implement the method, or alternate methods. Additionally, individual blocks may be omitted from the method without departing from the scope of the invention as defined by the appended claims. In the context of software, the blocks represent computer instructions that, when executed by one or more processors, perform the recited operations.

Referring back to FIG. 9, at block 902, the invisible control system 106 may receive a selection gesture on a predetermined region of the client device 104 or the application 112. The selection gesture may include, but is not limited to, using a pointing device to press and hold on the predetermined region, tap the predetermined region for a predetermined number of times within a predetermined time period, swipe up or down along the predetermined region, swiping up and down in quick succession along the predetermined region, rotating along the predetermined region in a clockwise or counterclockwise direction, etc. In one embodiment, the predetermined region may include, for example, a border or an edge of the client device 104, or a border or an edge of a window frame bounding the application 112.

At block 904, in response to receiving or detecting the selection gesture, the invisible control system 106 may determine a location or side of the predetermined region at which the selection gesture is received or detected. In one embodiment, each location of side of the predetermined region may be associated with a predetermined action that is different from predetermined actions associated with other locations or sides of the predetermined regions. In another embodiment, the predetermined action associated with a location or side of the predetermined region may be the same as some other locations or sides of the predetermined region with different or same magnitude.

At block 906, in response to determining that the invisible control system 106 needs to actuate a predetermined action, the invisible control system 106 actuates the predetermined action based on the determined location or side of the predetermined region. In one embodiment, the invisible control system 106 may actuate or apply the predetermined action on an object displayed in the client device 104 or data associated with the object. The object may include, but is not limited to, some or all of the content displayed by the client device 104, the application 112 or some or all of the content that is served in the application 112 that is in an active view when the selection gesture is received. The data associated with the object may include, but is not limited to, content displayed in the object, metadata such as historical data associated with the object, etc.

At block 908, in response to determining that the invisible control system 106 needs to activate a predetermined operation mode, the invisible control system 106 activates the predetermined operation mode based on the determined location or side of the predetermined region. After activating the predetermined operation mode, the invisible control system 106 may wait to receive further input or gestures from the user 102.

At block 910, the invisible control system 106 may receive or detect a subsequent gesture from the user 102. In one embodiment, the invisible control system 106 may receive the subsequent gesture that is applied on the object displayed in the display of the client device 104 or the data associated with the object.

At block 912, in response to receiving or detecting the subsequent gesture, the invisible control system 106 may apply the predetermined action (which has been activated in response to receiving or detecting the selection gesture) on the object and/or the data associated with the object. The data associated with the object may include, for example, content displayed in the object and/or metadata associated with the object, etc.

Optionally, the invisible control system 106 may further provide an indication to indicate to the user 102 that an invisible control is activated. Additionally or alternatively, the invisible control system 106 may provide an acknowledgement to the user 102 in response to receiving or detecting the selection gesture and/or the subsequent gesture from the user 102.

Any of the acts of any of the methods described herein may be implemented at least partially by a processor or other electronic device based on instructions stored on one or more computer-readable media. By way of example and not limitation, any of the acts of any of the methods described herein may be implemented under control of one or more processors configured with executable instructions that may be stored on one or more computer-readable media such as one or more computer storage media.

### Conclusion

Although the invention has been described in language specific to structural features and/or methodological acts, it is to be understood that the invention is not necessarily limited to the specific features or acts described. Rather, the specific features and acts are disclosed as exemplary forms of implementing the invention, which is defined by the appended claims.

## Claims

1. A computer-implemented method, comprising:
displaying content on a display of a computing device (104);
detecting at the border of the display (206) of the computing device (104) using a touch sensor a first gesture from a user; and
in response to detecting the first gesture at the border of the display (206), changing from a current mode of operation of the computing device (104) to a search mode of operation being usable to perform a search;
detecting on the display of the computing device (104) using the touch sensor a second gesture from the user with regard to a content displayed on the display (206) of the computing device (104), the second gesture identifying subject matter to be searched; and
automatically causing a search to be performed based at least in part on the identified subject matter in response to completion of the second gesture; and
displaying results from the search in a floating window (716) overlaid on the content on the display.

2. The method of claim 1, wherein the content on the display (206) of the computing device (104) includes an object, the method further comprising:
enabling interaction with the object in the current mode of operation; and
disabling at least some interaction with the object in the search mode of operation.

3. The method of claim 1, wherein detecting the first gesture comprises detecting a user input in proximity to an invisible button defined around at least a portion of the border of the display (206) of the computing device (104).

4. The method of claim 1, further comprising determining a location of the border of the display (206) at which the first gesture is detected, wherein the search mode to which the current operating mode is changed, is based on the location of the border of the display (206) at which the first gesture is detected.

5. The method of claim 4, wherein determining the location of the border of the display (206) comprises determining a side of the border of the display (206) at which the first gesture is detected, and the search mode is chosen based at least in part on the determined side of the border of the display (206).

6. The method of claim 1, further comprising, after changing to the search mode:
receiving as a second gesture a plurality of selection gestures to select a plurality of disjoint objects displayed in the display (206); and
performing a search operation based on the plurality of disjoint objects.

7. The method of claim 6, wherein the plurality of disjoint objects comprise a region of text, an image, audio and/or video.

8. The method of claim 1, wherein the current operating mode is based on an application being accessed at the time the first gesture is performed.

9. The method of claim 1, further comprising displaying a search box in response to changing to the search mode.

10. The method of claim 1, further comprising:
interpreting the first gesture; and
selecting the search mode from among a plurality of predetermined operating modes based on the interpretation of the first gesture.

11. The method of claim 1, wherein the floating window (716) is partly transparent.

12. A computing device (104) comprising:
a touch sensor for detecting a gesture;
a display (206) for displaying content;
one or more processors (108); and
memory (110), communicatively coupled to the one or more processors (108), storing instructions that, when executed by the one or more processors (108), configure the computing device (104) to perform the method of any preceding claim.

13. One or more computer-readable media (110) configured with computer-executable instructions that, when executed by the one or more processors (108) of the computing device (104) of claim 12, configure the one or more processors (108) to perform the method of any of claims 1-11.

## Patentansprüche

1. Computerimplementiertes Verfahren, umfassend:
Anzeigen von Inhalt auf einer Anzeige einer Datenverarbeitungsvorrichtung (104);
Erkennen einer ersten Geste eines Benutzers an der Grenze der Anzeige (206) der Datenverarbeitungsvorrichtung (104) unter Verwendung eines Berührungssensors; und
als Reaktion auf Erkennen der ersten Geste an der Grenze der Anzeige (206), Wechseln von einem aktuellen Betriebsmodus der Datenverarbeitungsvorrichtung (104) in einen Suchbetriebsmodus, welcher verwendbar ist, um eine Suche auszuführen;
Erkennen einer zweiten Geste des Benutzers mit Bezug auf Inhalt, welcher auf der Anzeige (206) der Datenverarbeitungsvorrichtung (104) angezeigt wird, auf der Anzeige der Datenverarbeitungsvorrichtung (104) unter Verwendung des Berührungssensors, wobei die zweite Geste das zu suchende Sachgebiet identifiziert; und
automatischen Veranlassen einer Suche, welche zumindest teilweise auf Basis des identifizierten Sachgebiets ausgeführt werden soll, als Reaktion auf Vollendung der zweiten Geste; und
Anzeigen von Ergebnissen der Suche in einem unverankerten Fenster (716), welches den Inhalt auf der Anzeige überlagert.

2. Verfahren nach Anspruch 1, wobei der Inhalt auf der Anzeige (206) der Datenverarbeitungsvorrichtung (104) ein Objekt beinhaltet, wobei das Verfahren weiter umfasst:
Aktivieren von Interaktion mit dem Objekt in dem aktuellen Betriebsmodus; und
Deaktivieren zumindest einiger Interaktion mit dem Objekt in dem Suchbetriebsmodus.

3. Verfahren nach Anspruch 1, wobei Erkennen der ersten Geste Erkennen einer Benutzereingabe in der Nähe einer unsichtbaren Schaltfläche umfasst, welche rund um zumindest einen Abschnitt der Grenze der Anzeige (206) der Datenverarbeitungsvorrichtung (104) definiert ist.

4. Verfahren nach Anspruch 1, weiter Bestimmen eines Orts der Grenze der Anzeige (206), an welchem die erste Geste erkannt wird, umfassend, wobei der Suchmodus, in welchen der aktuelle Betriebsmodus wechselt, auf dem Ort der Grenze der Anzeige (206) basiert, an welchem die erste Geste erkannt wird.

5. Verfahren nach Anspruch 4, wobei Bestimmen des Orts der Grenze der Anzeige (206) Bestimmen einer Seite der Grenze der Anzeige (206) umfasst, an welcher die erste Geste erkannt wird, und der Suchmodus zumindest teilweise auf Basis der bestimmten Seite der Grenze der Anzeige (206) gewählt wird.

6. Verfahren nach Anspruch 1, nach dem Wechseln in den Suchmodus weiter umfassend:
Empfangen einer Vielzahl von Auswahlgesten als eine zweite Geste, um eine Vielzahl von nicht verbundenen Objekten auszuwählen, welche auf der Anzeige '(206) angezeigt werden; und
Ausführen eines Suchvorgangs auf Basis der Vielzahl von nicht verbundenen Objekten.

7. Verfahren nach Anspruch 6, wobei die Vielzahl von nicht verbundenen Objekten eine Textregion, ein Bild, Audio und/oder Video umfasst.

8. Verfahren nach Anspruch 1, wobei der aktuelle Betriebsmodus auf einer Anwendung basiert, auf welche zu dem Zeitpunkt zugegriffen wird, zu dem die erste Geste ausgeführt wird.

9. Verfahren nach Anspruch 1 weiter Anzeigen eines Suchfelds als Reaktion auf Wechseln in den Suchmodus umfassend.

10. Verfahren nach Anspruch 1, weiter umfassend:
Auslegen der ersten Geste; und
Auswählen des Suchmodus aus einer Vielzahl von vorbestimmten Betriebsmodi auf Basis der Auslegung der ersten Geste.

11. Verfahren nach Anspruch 1, wobei das unverankerte Fenster (716) teilweise transparent ist.

12. Datenverarbeitungsvorrichtung (104), umfassend:
einen Berührungssensor zum Erkennen einer Geste;
eine Anzeige (206) zum Anzeigen von Inhalt;
einen oder mehrere Prozessoren (108); und
Speicher (110), welcher mit dem einen oder den mehreren Prozessoren (108) kommunikativ gekoppelt ist, welcher Anweisungen speichert, welche, wenn durch den einen oder die mehreren Prozessoren (108) ausgeführt, die Datenverarbeitungsvorrichtung (104) konfigurieren, um das Verfahren nach einem der vorstehenden Ansprüche auszuführen.

13. Ein oder mehrere computerlesbare Medien (110), welche mit computerausführbaren Anweisungen konfiguriert sind, welche, wenn durch den einen oder die mehreren Prozessoren (108) der Datenverarbeitungsvorrichtung (104) nach Anspruch 12 ausgeführt, den einen oder die mehreren Prozessoren (108) konfigurieren, um das Verfahren nach einem der Ansprüche 1-11 auszuführen.

## Revendications

1. Procédé mis en œuvre par ordinateur, comprenant les étapes consistant à :
afficher du contenu sur un affichage d'un dispositif informatique (104) ;
détecter un premier geste d'un utilisateur au niveau de la bordure de l'affichage (206) du dispositif informatique (104) en utilisant un capteur tactile ; et
en réponse à la détection du premier geste au niveau de la bordure de l'affichage (206), passer d'un mode de fonctionnement actuel du dispositif informatique (104) à un mode de fonctionnement de recherche pouvant être utilisé pour effectuer une recherche ;
détecter sur l'affichage du dispositif informatique (104), en utilisant le capteur tactile, un second geste de l'utilisateur en ce qui concerne un contenu affiché sur l'affichage (206) du dispositif informatique (104), le second geste identifiant le sujet à rechercher ; et
amener automatiquement une recherche à être effectuée sur la base au moins en partie du sujet identifié en réponse à l'achèvement du second geste ;
et
afficher des résultats de la recherche dans une fenêtre flottante (716) superposée au contenu sur l'affichage.

2. Procédé selon la revendication 1, dans lequel le contenu sur l'affichage (206) du dispositif informatique (104) inclut un objet, le procédé comprenant en outre les étapes consistant à :
activer une interaction avec l'objet dans le mode de fonctionnement actuel ; et
désactiver au moins une certaine interaction avec l'objet dans le mode de fonctionnement de recherche.

3. Procédé selon la revendication 1, dans lequel la détection du premier geste comprend une détection d'une entrée d'utilisateur à proximité d'un bouton invisible défini autour d'au moins une partie de la bordure de l'affichage (206) du dispositif informatique (104).

4. Procédé selon la revendication 1, comprenant en outre une détermination d'un emplacement de la bordure de l'affichage (206) au niveau duquel le premier geste est détecté, dans lequel le mode de recherche, pour lequel le mode de fonctionnement actuel est modifié, est basé sur l'emplacement de la bordure de l'affichage (206) au niveau duquel le premier geste est détecté.

5. Procédé selon la revendication 4, dans lequel la détermination de l'emplacement de la bordure de l'affichage (206) comprend une détermination d'un côté de la bordure de l'affichage (206) au niveau duquel le premier geste est détecté, et le mode de recherche est choisi sur la base au moins de partie du côté déterminé de la bordure de l'affichage (206).

6. Procédé selon la revendication 1, comprenant en outre, après le passage au mode de recherche, les étapes consistant à :
recevoir comme second geste une pluralité de gestes de sélection pour sélectionner une pluralité d'objets disjoints affichés dans l'affichage (206) ; et
effectuer une opération de recherche sur la base de la pluralité d'objets disjoints.

7. Procédé selon la revendication 6, dans lequel la pluralité d'objets disjoints comprend une région de texte, une image, un audio et/ou une vidéo.

8. Procédé selon la revendication 1, dans lequel le mode de fonctionnement actuel est basé sur un accès à une application au moment où le premier geste est effectué.

9. Procédé selon la revendication 1, comprenant en outre un affichage d'une zone de recherche en réponse à un changement vers le mode de recherche.

10. Procédé selon la revendication 1, comprenant en outre les étapes consistant à :
interpréter le premier geste ; et
sélectionner le mode de recherche parmi une pluralité de modes de fonctionnement prédéterminés sur la base de l'interprétation du premier geste.

11. Procédé selon la revendication 1, dans lequel la fenêtre flottante (716) est partiellement transparente.

12. Dispositif informatique (104), comprenant :
un capteur tactile pour détecter un geste ;
un affichage (206) pour afficher un contenu ;
un ou plusieurs processeurs (108) ; et
une mémoire (110), couplée en communication avec les un ou plusieurs processeurs (108), stockant des instructions qui, lorsqu'elles sont exécutées par les un ou plusieurs processeurs (108), configurent le dispositif informatique (104) pour exécuter le procédé selon l'une quelconque des revendications précédentes.

13. Support(s) lisible(s) par ordinateur (110) configurés avec des instructions exécutables par ordinateur qui, lorsqu'elles sont exécutées par les un ou plusieurs processeurs (108) du dispositif informatique (104) de la revendication 12, configurent les un ou plusieurs processeurs (108) pour effectuer le procédé de l'une quelconque des revendications 1-11.
